(19) **Europäisches Patentamt**

**European Patent Office**

**Office européen des brevets**

(11) **EP 1 559 891 A1**

(12) **EUROPEAN PATENT APPLICATION**

(43) Date of publication:
**03.08.2005 Bulletin 2005/31**

(51) Int Cl.⁷: **F02D 41/00**, F02D 41/18, F02D 41/10, F02D 41/14

(21) Application number: **04100295.7**

(22) Date of filing: **28.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Delphi Technologies, Inc.**
**Troy, MI 48007 (US)**

(72) Inventors:
• **GHEZZI, Olivier, Bertrand**
**57330, Hettange-Grande (FR)**

• **VONCKEN, Claude**
**8232, Mamer (LU)**
• **SCHREURS, Bart**
**6700, Waltzing (BE)**

(74) Representative: **Ocvirk, Philippe et al**
**Office Ernest T. Freylinger S.A.**
**P.O. Box 48**
**8001 Strassen (LU)**

(54) **Turbocharged engine control method having improved smoke control**

(57)     The invention relates to a method for controlling a turbocharged internal combustion engine, wherein the airflow measured upstream of the turbocharger is used to calculate a corrected airflow indicative of the airflow which actually enters the engine during a transient condition of the engine. This method allows an improved smoke control and EGR flow rate control.

Fig.1

**Description**

*FIELD OF THE INVENTION*

The present invention generally relates to a method and an apparatus for controlling a turbocharged internal combustion engine that particularly allows an improved smoke control.

*BACKGROUND OF THE INVENTION*

The air to fuel ratio determines the generation of smoke of a diesel engine. Especially, during transient conditions of a diesel engine, i.e., during acceleration and deceleration, the control of the air to fuel ratio is of particular concern because it is usually based on a compromise between maximum torque and minimum smoke emission.

In order to limit the generation of smoke during transient conditions of a diesel engine, the quantity of fuel injected into the combustion chamber of a diesel engine is therefore limited based on the measured intake air mass by close adherence to a predetermined function which is called smoke limiter or smoke-limit curves.

Especially, on turbocharged engines, it has been noted that it is difficult to estimate or predict the injected fuel amount to efficiently prevent smoke formation in transient conditions with steady state smoke limits. In order to overcome this drawback, the smoke limiter or smoke-limit curves, which are calculated for a particular engine at different loads and conditions, can be corrected. Unfortunately, compensating an error during acceleration by calibrating the smoke limit towards leaner values will lead to undesired torque reduction under steady state operation. Not compensating the engine airflow error will lead to visible smoke during transient conditions. Furthermore, to get acceptable results, these conditions need a lot of calibration, storage space in the ECU (Electronic Control Unit), and processing time of the ECU.

*OBJECT OF THE INVENTION*

It is an object of the present invention to provide a method and an apparatus for controlling a turbocharged internal combustion engine that allows an improved control of smoke generation under transient conditions of the engine. This object is achieved by a method as claimed in claim 1 and a respective apparatus as claimed in claim 13.

*SUMMARY OF THE INVENTION*

The present invention particularly results from the observation of the following facts: for turbocharged engines, the airflow is measured upstream of the compressor in order to avoid oil contamination of the air meter. However, the actual airflow entering the engine only equals the measured airflow in steady state conditions of the engine, because during acceleration, part of the airflow is required to first raise the pressure in the section downstream of the compressor, i.e., in the high pressure side with a typical significant volume of several litres when equipped with an intercooler, before entering the engine. Therefore, during acceleration, the flow meter indication will typically overestimate the actual air mass flowing into the engine combustion chambers. Conversely, it will underestimate the actual air mass flow during a deceleration of the engine.

The invention essentially uses the airflow measurement upstream of the turbo compressor in order to calculate a corrected airflow indicative of the airflow that actually enters the engine during transient conditions at the same moment. This is accomplished by taking into account the pressurizing, i.e., filling or emptying of the high-pressure side of the intake line during transient conditions of the engine. In more detail, the invention takes into account the "dead" volume downstream of the airflow meter between the turbo compressor and engine. The "dead" volume is essentially formed by the "manifold" volume or the volume of the high pressure side of the intake section, including air ducts, optionally the intercooler and the intake manifold itself.

The invention thus relates to a method for controlling a turbocharged internal combustion engine, wherein the airflow measured upstream of the turbocharger is used to calculate a corrected airflow indicative of the airflow which actually enters the engine during a transient condition of the engine, taking into account the pressurizing of the high-pressure side of the intake line downstream of the turbocharger.

This corrected airflow determined in accordance with the present method provides a more accurate indication of the airflow actually entering the engine than the airflow value measured upstream of the turbocharger and can advantageously be used in all calculations related to engine control and requiring the airflow value through the engine. It will be appreciated that determining this corrected airflow is of particular interest for controlling the generation of smoke. In such a case, the corrected airflow determined in accordance with the method of the invention is used as input airflow value to determine the fuel quantity to be injected. Although the present method is particularly well suited for determining the actual airflow in turbocharged diesel engines, namely in view of smoke control, it may also be implemented with other types of turbocharged engines, such as gasoline engines.

Furthermore, the corrected airflow can also advantageously be used for controlling the Exhaust Gas recirculation (EGR) flow rate on engines equipped with an EGR valve. Indeed, in order to effectively control engines with EGR systems, it is necessary to control the EGR flow precisely, not only in steady state, but also in transient conditions. Precise EGR control requires i.a. monitoring of the EGR flow and of the fresh air flow, an improved estimation of which is given by the corrected airflow determined according to the present invention.

Preferably, the airflow measured upstream of the turbocharger is corrected by a correction term calculated from two consecutive measurements of the pressure of the air in the high-pressure side of the intake line.

Also, the temperature of the intake air can be used for calculating the correction term in order to get a more precise corrected airflow value. Ideally, the intake air temperature should be measured in the high-pressure side of the intake line. However, in practice, it is already considered sufficient to use the temperature of the air measured at the entry of the intake line, i.e. in the low-pressure side.

Especially, the air density in the high-pressure side of the intake line is calculated based on the pressure and temperature for each measurement.

In a preferred embodiment, the manifold air mass is calculated by multiplying the manifold volume by the calculated air density.

The correction term for the change in the manifold air mass is preferably calculated by subtracting two calculated manifold air mass values. It can also be calculated by determining the mean value of several calculated manifold air mass values.

Preferably, two consecutive measurements are performed within a time interval of at least 30 ms. It has been shown that this is a good compromise between accuracy and required computing power.

The temperature and pressure measurements can be obtained from sensors that are traditionally provided in the engine for controlling parameters other than smoke limit so that the present method does not require additional sensors. However, actual pressure and/or temperature measurements from the high-pressure side of the intake line using additional sensor(s) can be used for the correction.

Preferably, the inventive method is performed by an electronic control unit (ECU) for controlling the turbocharged engine.

Further, the invention relates to an apparatus for controlling the generation of smoke of a diesel turbocharged engine, with an ECU for controlling the operation of the diesel engine, particularly for controlling the injection of fuel. The ECU is adapted to perform a method according to the invention. Typically, the ECU comprises a microprocessor and a memory to store programs and variables for performing typical control tasks. Preferably, the memory contains a computer program, which implements the steps necessary for performing the inventive method. It should be noted that according to the invention no or at least less additional hardware costs are incurred. Only, the program for controlling the injection of fuel has to be adapted in order to perform the method according to the invention.

## *BRIEF DESCRIPTION OF THE DRAWINGS*

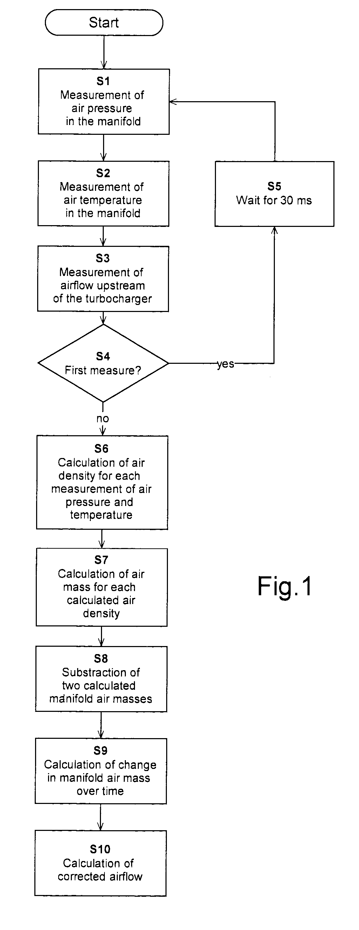

The present invention will now be described, by way of example, with reference to the accompanying drawing, Fig.1, in which a flow chart of an embodiment of the invention is shown.

## *DETAILED DESCRIPTION OF A PREFERRED EMBODIMENT*

A preferred embodiment of a method for controlling the generation of smoke of a diesel turbocharged engine in accordance with the invention will now be described.

Fig.1 shows a flow chart with several steps, which are performed by a microprocessor in a ECU executing a program implementing the present method.

In step S1, the air pressure in the high-pressure side of the intake line (hereinafter called "manifold") of a diesel engine is measured by a pressure sensor. This measured manifold pressure thus corresponds to the pressure downstream of the compressor. A signal corresponding to the measured pressure is transmitted to the ECU, digitalized, and stored in a memory. In step S2, the temperature of the air in the manifold is measured via a temperature sensor. The generated signal is also transmitted to the ECU, digitalized, and stored.

In next step S3, the ECU measures the air flow entering the intake line by means of an airflow meter (typically mass air flow meter) located upstream of the compressor. Again, generated signal is transmitted to the ECU, digitalized, and stored. It is to be noted that, although at step S2 the air temperature is measured by a sensor installed in the manifold, it is also possible to use in the present method the temperature of the air in the low-pressure side. Typically, the air temperature can be derived from an airflow meter based on the hot-wire technology, so that no additional temperature sensor is required.

In step S4, the ECU checks whether these measurements were the first measurements of a series of air pressure, temperature and airflow measurements. When the measurements are the first ones, the ECU performs further measurements by jumping back to step S1 after waiting for a time period of about 30 ms in step S5. It has been shown that 30 ms is a good compromise between the processing costs and the accuracy of the correction performed by the method according to the invention.

In step S6, the ECU calculates the air density in the manifold with each new set of measured air pressure and air temperature, i.e., for each time t at which the measurements were performed. The calculation is based on the following formula:

$$\text{air\_density}(t) = 0.34865 \times P(t) / T(t)$$

wherein P is the measured pressure (in mbar) and T the measured temperature (in K) at time t, and the air density is given in $kg/m^3$.

For each calculated air_density(t), the manifold air mass is calculated in step S7 by the following formula:

$$\text{manifold\_air\_mass}(t) = \text{air\_density}(t) \times \text{V\_manifold}$$

wherein V_manifold is the volume of the manifold, i.e., the volume of the high pressure side of the engine's intake line which includes air ducts, optionally the intercooler, and the intake manifold itself. V_manifold is constant and can be approximated by the volume of the intake line between the compressor outlet and the inlet of the combustion chambers of the engine.

With at least two calculated manifold_air_mass values for two different times, ideally two times at which the engine was in a transient condition, the variation of the air mass in the manifold can be calculated in step S8 by subtracting the at least two calculated manifold_air_mass values. The time period of the consecutive measurements of the air pressure and temperature as well as the number of calculated manifold_air_mass values for calculating the variations in the air mass influence the accuracy of the correction. If more than two calculated manifold_air_mass values are processed, a mean value of the calculated manifold_air_mass values can be derived by the ECU.

Since the variation over the time is of interest for the control of the air to fuel ratio, in a further step S9, the ECU performs a calculation of the following formula:

$$(\text{manifold\_air\_mass}(t1) - \text{manifold\_air\_mass}(t2))/(t2-t1)$$

or more generally

$\Delta$ manifold_air_mass/$\Delta$ t

The term $\Delta$ manifold_air_mass/$\Delta$ t represents the rate of variation of the air mass in the manifold between two consecutive measurements. It is mainly influenced by the variation of the pressure in the high pressure side of the engine's intake line.

Finally, in step S10, the measured mass airflow is corrected by subtracting the change of the manifold air mass over time as calculated by the above formula:

$$\text{mass\_airflow\_corrected} = \text{mass\_airflow} - \Delta \text{ manifold\_air\_mass}/\Delta \text{ t}$$

The obtained corrected mass airflow can then be taken to control the air to fuel ratio, which determines the generation of smoke of the diesel engine.

Briefly summarized, the invention has the following advantages:

- the method is based on physical considerations;

- the corrected airflow value obtained by correcting the measured mass airflow in accordance with the invention can represent up to 10 % of an airflow meter indication;

- the inventive method is easy to implement and can be computed in real time by a processor;

- the invention uses information which is already available and, therefore, no additional hardware is required, also no additional costs are incurred; and

- the calibration of a smoke limiter table can be made on dynamometer, no tedious calibration on engines or automobiles under different conditions are necessary for the smoke limiter.

It remains to be noted that, in steady state engine operation, the rate of variation $\Delta$ manifold_air_mass/$\Delta$ t will equal zero. This means that the present correction of the air flow can be permanently used to control the engine and it is not necessary to detect the beginning and the end of a transient to perform the correction.

**Claims**

1. Method for controlling a turbocharged internal combustion engine, wherein the airflow in the intake line of the engine is measured upstream of the turbocharger in the low-pressure side of the intake line, **characterized in that** a corrected airflow indicative of the airflow which actually enters the engine during a transient condition of the engine is determined taking into account the pressurizing of the high-pressure side of the intake line downstream of the turbocharger.

2. Method according to claim 1, **characterized in that** said corrected airflow indicative of the airflow which actually enters the engine is determined by correcting the airflow measured upstream of the turbocharger by a correction term calculated from two consecutive measurements of the pressure of the air in the high-pressure side of the intake line (S1).

3. Method according to claim 2, **characterized in that** also the temperature of the air in the high-pressure side of the intake line is used for calculating the correction term (S2).

4. Method according to claim 2 or 3, **characterized in that** the air density in the high-pressure side of the intake line is calculated based on the pressure and temperature for each measurement (S3).

5. Method according to claim 4, **characterized in that** the air mass in the high-pressure side of the intake line is calculated by multiplying the volume of the high-pressure side by the calculated air density (S6).

6. Method according to claim 4, **characterized in that** the correction term for the change in the manifold air mass is calculated by subtracting two calculated manifold air mass values (S7).

7. Method according to any of the claims 2 to 6, **characterized in that** two consecutive measurements are performed within a time interval of at least 30 ms (S1-S4).

8. Method according to any of the claims 2 to 7, **characterized in that** actual pressure and/or temperature measurements from the manifold section using additional sensor(s) are used for the correction.

9. Method according to any one of the preceding claims, **characterized in that** said corrected airflow is used for controlling the generation of smoke.

10. Method according to any one of the preceding claims, **characterized in that** said corrected airflow is used for controlling the EGR flow rate.

11. Method according to any one of the preceding claims, **characterized in that** said engine is a diesel or gasoline engine.

12. Method according to any of the preceding claims, **characterized in that** it is performed by an electronic control unit for controlling the turbocharged engine.

13. Apparatus for controlling the generation of smoke of a diesel turbocharged engine, with an Electronic Control Unit for controlling the operation of the diesel engine, particularly for controlling the injection of fuel, **characterized in that** the ECU is adapted to perform a method according to claim 9.

Fig.1

**European Patent Office**

**EUROPEAN SEARCH REPORT**

Application Number

EP 04 10 0295

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 076 166 A (VOLKSWAGENWERK AG) 14 February 2001 (2001-02-14) * the whole document * ----- | 1-13 | F02D41/00 F02D41/18 F02D41/10 F02D41/14 |
| A | DE 101 58 250 A (VOLKSWAGENWERK AG) 18 June 2003 (2003-06-18) * abstract * * claims * ----- | 1,10,13 | |
| A | US 6 588 261 B1 (REUSCHENBACH LUTZ ET AL) 8 July 2003 (2003-07-08) * abstract * * claims * ----- | | |

TECHNICAL FIELDS SEARCHED (Int.Cl.7)

F02D

The present search report has been drawn up for all claims

| Place of search | Date of completion of the search | Examiner |
|---|---|---|
| The Hague | 29 June 2004 | Trotereau, D |

EPO FORM 1503 03.82 (P04C01)

**ANNEX TO THE EUROPEAN SEARCH REPORT
ON EUROPEAN PATENT APPLICATION NO.**                                    EP 04 10 0295

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2004

| Patent document cited in search report | | Publication date | Patent family member(s) | | Publication date |
|---|---|---|---|---|---|
| EP 1076166 | A | 14-02-2001 | DE | 19938260 A1 | 15-02-2001 |
| | | | EP | 1076166 A2 | 14-02-2001 |
| DE 10158250 | A | 18-06-2003 | DE | 10158250 A1 | 18-06-2003 |
| | | | WO | 03046356 A2 | 05-06-2003 |
| US 6588261 | B1 | 08-07-2003 | DE | 19740914 A1 | 08-10-1998 |
| | | | WO | 9844250 A1 | 08-10-1998 |
| | | | DE | 19740915 A1 | 08-10-1998 |
| | | | DE | 19740916 A1 | 08-10-1998 |
| | | | DE | 19740917 A1 | 15-10-1998 |
| | | | DE | 19740918 A1 | 08-10-1998 |
| | | | DE | 19740969 A1 | 08-10-1998 |
| | | | DE | 19740970 A1 | 08-10-1998 |
| | | | DE | 19756619 A1 | 08-10-1998 |
| | | | DE | 19756919 A1 | 08-10-1998 |
| | | | DE | 59809586 D1 | 16-10-2003 |
| | | | EP | 1015746 A1 | 05-07-2000 |
| | | | JP | 2001516421 T | 25-09-2001 |

EPO FORM P0459

For more details about this annex : see Official Journal of the European Patent Office, No. 12/82